(19) Europäisches Patentamt
European Patent Office
Office européen des brevets

(11) **EP 2 090 189 B1**

(12) **FASCICULE DE BREVET EUROPEEN**

(45) Date de publication et mention
de la délivrance du brevet:
**04.07.2012 Bulletin 2012/27**

(51) Int Cl.:
**A47B 88/00** *(2006.01)*

(21) Numéro de dépôt: **09152539.4**

(22) Date de dépôt: **11.02.2009**

(54) **Appareillage de maintien de deux éléments dans une position relative précise avec compensation de dilatations différentielles**

Geräte zur Aufrechterhaltung von zwei Elementen in einer relativ präzisen Position mit Ausgleich der Differentialdehnungen

Apparatus for maintaining two elements in a precise relative position with compensation of differential expansions

(84) Etats contractants désignés:
**DE FR GB IT**

(30) Priorité: **13.02.2008 FR 0850896**

(43) Date de publication de la demande:
**19.08.2009 Bulletin 2009/34**

(73) Titulaire: **Snecma Propulsion Solide**
**33187 Le Haillan Cedex (FR)**

(72) Inventeur: **Petit, Alain**
**33114 LE BARP (FR)**

(74) Mandataire: **Joly, Jean-Jacques et al**
**Cabinet Beau de Loménie**
**158, rue de l'Université**
**75340 Paris cedex 07 (FR)**

(56) Documents cités:
**EP-A2- 1 767 325     DE-A1- 19 531 698**
**US-A- 5 356 692**

**Description**

Arrière-plan de l'invention

L'invention concerne un appareillage pour le maintien de deux éléments dans une position relative précise selon un axe commun et sans exercer de contraintes notables en dépit de dilatations différentielles entre les éléments à positionner et les composants du dispositif de positionnement.

Un domaine particulier d'application de l'invention est celui du positionnement relatif de deux éléments d'outillage, notamment des éléments d'outillage utilisés pour le moulage ou la conformation de pièces en matériau composite.

La géométrie particulière d'une pièce à réaliser peut requérir l'utilisation d'outillage en plusieurs éléments pour permettre le démontage de l'outillage. Il est alors souhaitable et même souvent nécessaire d'assurer un positionnement relatif précis des éléments d'outillage pour éviter des défauts de surface de la pièce réalisée au niveau de zones de raccordement entre les éléments d'outillage. En effet, généralement, l'élimination de tels défauts par usinage de la pièce ne peut être envisagée que dans une mesure très limitée ou même être impossible pour ne pas affecter la géométrie souhaitée de la pièce ou, dans le cas de pièces en matériau composite à renfort fibreux, pour ne pas attaquer les fibres du renfort.

La réalisation d'une pièce peut requérir un traitement thermique avec l'outillage en place. Il en est ainsi notamment dans le cas de la réticulation d'une résine imprégnant un renfort fibreux d'une pièce en matériau composite. On utilise alors des éléments d'outillage à très faible coefficient de dilatation thermique pour qu'ils conservent leur forme dans la plage de températures d'utilisation, de manière à laisser sensiblement invariable la forme définie par l'outillage et/ou pour éviter une dilatation différentielle entre l'outillage et un matériau à très faible dilatation constituant la pièce moulée ou conformée.

La déposante a constaté que l'emploi de matériaux connus à très faible coefficient de dilatation thermique, tel que l'"Invar", pour la réalisation d'éléments d'outillage génère d'importantes difficultés pour constituer des assemblages de précision devant faire l'objet de nombreux montages et démontages tout en conservant un positionnement relatif précis entre les éléments. En effet, ce type de matériaux présente des propriétés mécaniques et une dureté relativement faibles. Au fur et à mesure des montages et démontages, une dégradation plus ou moins rapide de la précision de positionnement relatif apparaît qui peut conduire au rebut de l'outillage du fait de son incapacité à répondre aux besoins.

Le document DE 195 31 698 décrit une ferrure permettant d'assembler un panneau avant d'habillage d'un tiroir d'un meuble à la paroi latérale du tiroir. La ferrure comporte une première partie fixée au panneau et présentant un appendice qui se verrouille par encliquetage dans une deuxième partie fixée au tiroir, la deuxième partie ayant des moyens de réglage de la position du panneau verticalement et horizontalement.

Objet et résumé de l'invention

Selon un de ses aspects, l'invention a pour objet de fournir un appareillage qui permet une utilisation répétée avec montage et démontage de deux éléments sans affecter la précision de leur positionnement relatif, y compris lorsque les deux éléments sont en un matériau présentant des propriétés mécaniques et une dureté relativement faibles, et qui permet de conserver le positionnement relatif précis des deux éléments sans exercer sur ceux-ci de contraintes notables en cas de variation de température.

Ce but est atteint grâce à un appareillage pour le maintien d'un premier élément et d'un deuxième élément dans une position relative précise selon un axe commun, l'appareillage comportant plusieurs dispositifs de positionnement agissant dans des directions de positionnement respectives différentes non parallèles à l'axe commun et chaque dispositif de positionnement comprenant :

- une première partie destinée à être associée au premier élément et ayant une face d'appui avant pour venir en contact avec une surface d'appui du premier élément perpendiculaire à la direction de positionnement et une face de contact arrière opposée à la face avant dans la direction de positionnement,
- une deuxième partie destinée à être associée au deuxième élément et ayant une face de contact avant pour venir en contact avec la face de contact arrière de la première partie et une face d'appui arrière opposée à la face de contact avant dans la direction de positionnement, et
- une butée ayant une face avant de butée pour venir en contact avec la face arrière d'appui de la deuxième partie, la butée étant portée par un corps de butée pour fixation au deuxième élément ou étant conçue pour être portée par une partie de butée faisant partie intégrante du deuxième élément,
- les composants de la première partie, de la deuxième partie et de la butée destinés à venir en appui mutuel entre le premier et le deuxième élément, étant réalisés en des matériaux métalliques présentant des caractéristiques de résistance mécanique et de dureté supérieures à celles du matériau constitutif du premier et du deuxième élément, et
- les dimensions desdits composants et leurs matériaux constitutifs étant tels que, parallèlement à la direction de positionnement, les variations dimensionnelles cumulées d'origine thermique desdits composants correspondent sensiblement à la variation de la distance entre la surface d'appui du premier élément et une surface du deuxième élément perpendiculaire à la direction de positionnement et supportant la butée ou le corps de butée.

Ainsi, l'invention est remarquable par l'utilisation de composants ayant les propriétés mécaniques requises pour garantir une précision de positionnement durable, mais sans exercer de contraintes notables sur les éléments assemblés en dépit de coefficients de dilatation thermique différents.

Avantageusement, la face de contact arrière de la première partie et la face de contact avant de la deuxième partie sont inclinées d'un même angle non nul par rapport à un plan perpendiculaire à la direction de positionnement.

Selon une particularité du dispositif de positionnement, la première partie comprend un premier bloc ayant lesdites faces d'appui avant et de contact arrière et la deuxième partie comprend un deuxième bloc ayant ladite face avant de contact.

Avantageusement, le dispositif de positionnement comprend alors un correcteur d'alignement du deuxième bloc par rapport au premier bloc, le correcteur d'alignement comportant des butées réglables agissant sur des faces latérales du deuxième bloc ou d'une pièce solidaire de celui-ci.

Le dispositif de positionnement peut aussi alors comprendre des correcteurs de géométrie interposés entre une face arrière du deuxième bloc opposée à la face avant de contact et le corps de butée ou la partie de butée, un premier correcteur de géométrie étant susceptible de pivoter autour d'un premier axe perpendiculaire à la direction de positionnement et un deuxième correcteur de géométrie étant susceptible de pivoter autour d'un deuxième axe perpendiculaire à la direction de positionnement et au premier axe.

Les correcteurs de géométrie peuvent être sous forme de cylindres avec méplat.

L'un des correcteurs de géométrie peut s'engager par sa partie cylindrique dans un logement de forme cylindrique correspondante formé dans une face arrière du deuxième bloc opposée à la face avant de contact. La deuxième partie du dispositif de positionnement peut comprendre une platine de support ayant une surface interne sur laquelle le deuxième bloc est disposé et une surface externe opposée à la surface interne dans une direction perpendiculaire à la direction de positionnement pour venir en contact avec une surface du deuxième élément parallèle à la direction de positionnement, et le premier correcteur de géométrie est monté sur ladite platine de support de manière à pouvoir pivoter autour d'un axe perpendiculaire à la direction de positionnement.

L'autre correcteur de géométrie peut avoir son méplat formant ladite face avant de butée et a sa partie cylindrique engagée dans un logement de forme cylindrique correspondante du corps de butée ou conçue pour être engagée dans un logement de forme cylindrique correspondante de la partie de butée du deuxième élément.

Avantageusement, la première partie du dispositif de positionnement comprend un correcteur de géométrie portant la face de contact arrière de la première partie et susceptible de pivoter par rapport au premier bloc autour d'un axe perpendiculaire à la direction de positionnement pour garantir un appui face contre face entre la première partie et la deuxième partie.

Selon une particularité du dispositif de positionnement, il comprend un mécanisme de rattrapage de jeu comportant une cale biseautée interposée entre la première partie et la butée, la cale biseautée ayant une face avant et une face arrière qui sont opposées dans la direction de positionnement et qui forment entre elles un angle non nul, et un organe exerçant sur la cale une force de rappel élastique dans une direction de rappel perpendiculaire à la direction de positionnement.

La cale biseautée peut être insérée entre les correcteurs de géométrie pour venir au contact des méplats de ceux-ci par ses faces avant et arrière.

Une pièce de neutralisation du mécanisme de rattrapage de jeu peut être prévue agissant sur la cale biseautée dans un sens opposé à celui dans lequel s'exerce la force de rappel élastique.

Selon un autre aspect, l'invention a pour objet un ensemble formé par un premier et un deuxième élément maintenus dans une position relative précise selon un axe commun au moyen d'un appareillage comportant une pluralité de dispositifs de positionnement tels que définis ci-avant.

Un tel ensemble peut notamment constituer un outillage de moulage ou de conformation pour la réalisation de pièces en matériau composite.

Le premier élément et le deuxième élément peuvent avoir ou non des formes de révolution et se raccorder au niveau d'un plan de joint perpendiculaire à un axe d'assemblage des éléments, les dispositifs de positionnement agissant alors dans des directions de positionnement relatif respectives parallèles au plan de joint. Les directions de positionnement peuvent être situées dans un même plan ou dans plusieurs plans qui sont parallèles au plan de joint et situés de préférence à proximité ou sensiblement confondus avec celui-ci, et ne concourent de préférence alors pas en un même point situé sur l'axe d'assemblage du premier élément et du deuxième élément.

Selon encore un autre aspect, l'invention a pour objet un procédé de réalisation d'un ensemble formé par un premier élément et un deuxième élément maintenus dans une position relative au moyen d'un appareillage comportant une pluralité de dispositifs de positionnement tels que définis ci-avant, le procédé comprenant les étapes de :

- positionnement référentiel du premier élément et du deuxième élément au moyen d'organes de positionnement référentiel engagés dans des logements de référence de positionnement formés en vis-à-vis dans des parties adjacentes du premier et du deuxième élément,
- montage d'une pluralité de dispositifs de positionnement sur le premier et le deuxième élément dans un état non serré dans les directions de positionnement,
- assemblage du premier et du deuxième élément pour former ledit ensemble,
- réglage de chaque dispositif de positionnement dans sa direction de positionnement pour amener la première partie, la deuxième partie et la butée en contact mutuel et sans jeu entre le premier élément et le deuxième élément, et
- retrait des organes de positionnement référentiel.

Les organes de positionnement référentiel peuvent être sous forme de broches coniques.

Lorsque les dispositifs de positionnement de l'appareillage comportent une pièce de neutralisation de mécanisme de rattrapage de jeu, comme indiqué ci-avant, on neutralise avantageusement la fonction de rattrapage de jeu pendant l'action du correcteur d'alignement et des correcteurs de géométrie.

Selon une particularité du procédé, l'étape de réglage d'un dispositif de positionnement comprend alors :

- la neutralisation du mécanisme de rattrapage de jeu,
- l'action du correcteur d'alignement et des correcteurs de géométrie,
- l'application de la deuxième partie contre la première partie et la surface d'appui du premier élément au moyen d'un poussoir agissant dans la direction de positionnement,
- la libération du mécanisme de rattrapage de jeu pour maintenir la première partie et la deuxième partie appliquées l'une contre l'autre et contre la surface d'appui du premier élément ainsi que contre la surface de butée, et
- le recul du poussoir.

L'étape de réglage peut comprendre en outre le blocage de l'un au moins des correcteurs de géométrie après action et blocage du mécanisme de rattrapage de jeu.

Brève description des dessins

L'invention sera mieux comprise à la lecture de la description faite ci-après, à titre indicatif mais non limitatif, en référence aux dessins annexés sur lesquels :

- la figure 1 est une vue générale en perspective d'un outillage formé de deux éléments munis d'un appareillage comportant des dispositifs de positionnement, selon un premier mode de réalisation de l'invention ;
- la figure 2 est une vue de détail en perspective montrant partiellement les deux éléments d'outillage de la figure 1 à l'état non assemblé ;
- la figure 3 est une vue en perspective encore plus de détail montrant l'un des dispositifs de positionnement de la figure 2 ;
- la figure 4 est une vue en perspective montrant l'emplacement de réception sur l'un des éléments d'outillage d'une première partie du dispositif de positionnement de la figure 3 ;
- les figures 5 et 6 sont des vues en perspective de dessus et de dessous d'une deuxième partie du dispositif de positionnement de la figure 3 ;
- la figure 7 est une vue en perspective de côté montrant la deuxième partie du dispositif de positionnement de la figure 3 ;
- la figure 8 est une vue en perspective partielle de côté de la deuxième partie du dispositif de positionnement de la figure 3, avec omission d'un de ses composants ;
- les figures 9 et 10 sont des vues en perspective de dessus et de dessous d'une butée et d'un corps de butée du dispositif de positionnement de la figure 3 ;
- la figure 11 est une vue en perspective partielle avant de la butée et du corps de butée des figures 9 et 10 ;
- la figure 12 est une vue en perspective montrant l'emplacement de réception sur l'un des éléments d'outillage de la deuxième partie et du corps de butée du dispositif de positionnement de la figure 3 ;
- les figures 13 et 14 sont des vues respectivement en perspective et en coupe d'un écrou ;
- les figures 15 et 16 sont des vues en perspective d'un organe de positionnement référentiel à portée complète, respectivement en position d'assemblage et en position d'extraction ;
- la figure 17 est une vue de détail en perspective montrant partiellement les deux éléments d'outillage de la figure 1 à l'état non assemblé, l'un des éléments d'outillage étant équipé d'un organe de positionnement référentiel en vue du réglage initial des dispositifs de positionnement ;
- la figure 18 est une vue en coupe montrant un organe de positionnement référentiel à portée complète monté ;

- les figures 19 et 20 sont des vues en perspective d'un organe de positionnement référentiel à portée partiellement dégagée, respectivement en position d'assemblage et en position d'extraction ;
- la figure 21 est une vue en coupe montrant un organe de positionnement référentiel à portée dégagée monté ;
- la figure 22 est une vue très schématique illustrant le principe de compensation des dilatations différentielles entre les éléments d'outillage assemblés et un dispositif de positionnement tel que celui de la figure 3 ;
- la figure 23 est une vue en perspective montrant partiellement deux éléments d'outillage et un appareillage de positionnement, selon une variante du premier mode de réalisation de l'invention ;
- la figure 24 est une vue en perspective montrant une variante de réalisation de la première partie du dispositif de positionnement de la figure 3 ;
- la figure 25 est une vue en coupe transversale médiane à échelle agrandie de la première partie de dispositif de positionnement de la figure 24;
- la figure 26 est une vue schématique montrant un dispositif de positionnement associé à deux éléments selon un deuxième mode de réalisation de l'invention ;
- la figure 27 est une vue schématique partiellement en coupe d'une partie du dispositif de positionnement de la figure 26 ;
- les figures 28 et 29 sont des vues en perspective d'une cale thermorétractable du dispositif des figures 26 et 27 ;
- les figures 30 et 31 sont des vues en coupe médiane selon les plans XXX et XXXI des figures 28 et 29 ; et
- la figure 32 est une vue éclatée d'éléments constitutifs de la cale des figures 28 et 29.

Description détaillée de modes de réalisation

Des modes de réalisation de l'invention seront décrits ci-après dans le cadre du maintien dans un positionnement relatif précis de deux éléments d'outillage axisymétriques et coaxiaux utilisés pour la fabrication de pièces de tuyère en matériau composite. L'invention n'est toutefois pas limitée à une telle application et peut être utilisée pour maintenir en position relative précise d'autres éléments, non nécessairement axisymétriques, devant être assemblés le long d'un plan de joint suivant un axe d'assemblage commun, et pour d'autres utilisations, en particulier lorsque ces éléments présentent des caractéristiques mécaniques ou de dureté relativement faibles.

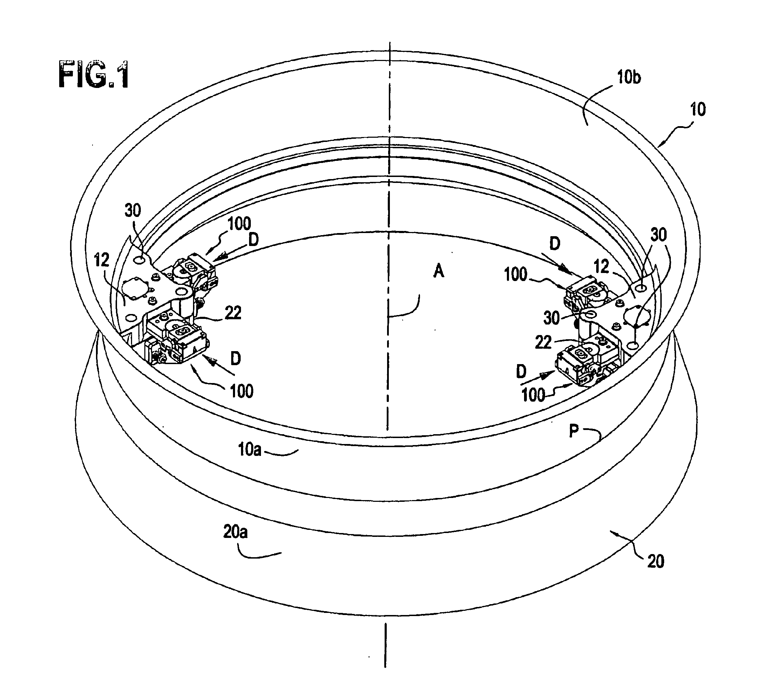

La figure 1 montre deux éléments d'outillage 10, 20 assemblés et équipés d'un appareillage comportant plusieurs dispositifs de positionnement 100 selon un mode de réalisation de l'invention.

Les éléments d'outillage 10, 20 sont, dans l'application envisagée, des éléments axisymétriques qui se raccordent le long d'un plan de joint P perpendiculaire à leur axe commun A. Ils sont utilisés pour la réalisation de pièces de tuyères de propulseurs, lesquelles pièces sont en matériau composite, notamment en matériau composite carbone/époxy et présentent un col entre une partie convergente et une partie divergente.

Les faces externes 10a, 20a des éléments 10, 20 constituent la forme sur laquelle des strates fibreuses en fibres de carbone préimprégnées par une résine précurseur de carbone sont conformées. Les strates, formant le renfort fibreux de la pièce de tuyère, sont maintenues entre l'outillage et une enveloppe externe pour effectuer un traitement thermique de polymérisation de la résine. L'outillage est ensuite retiré et un traitement thermique à plus haute température est réalisé pour pyrolyser la résine. La forme de la pièce de tuyère impose l'utilisation de deux éléments d'outillage se raccordant au niveau du col de la pièce de tuyère, pour pouvoir retirer la pièce après polymérisation de la résine. Un tel processus de fabrication de pièce de tuyère en matériau composite est bien connu en soi.

Les surfaces externes 10a, 20a des éléments d'outillage définissent la veine d'écoulement de la pièce de tuyère à réaliser. Il est important d'éviter tout défaut notable au niveau du col de la pièce de tuyère dû à une discontinuité de raccordement mutuel des surfaces 10a, 20a. En effet, l'élimination par usinage d'un tel défaut n'est guère envisageable car elle affecterait la géométrie de la pièce qui doit rester précise au niveau du col et endommagerait les fibres du renfort.

Il est donc impératif d'avoir un positionnement relatif précis des éléments d'outillage 10, 20.

Pour conserver en outre une géométrie précise de la pièce de tuyère à réaliser, y compris lors du traitement thermique de polymérisation, et éviter des dilatations différentielles entre l'outillage et la pièce en cours de réalisation, les éléments d'outillage sont en un matériau ayant un très faible coefficient de dilatation thermique. Un matériau couramment utilisé pour l'application ici envisagée est de type "Invar". Toutefois, ce matériau présente des propriétés mécaniques et une dureté relativement faibles, de sorte qu'une dégradation rapide de la précision de positionnement peut intervenir par suite de montages et démontages successifs de l'outillage.

Ainsi, le positionnement relatif précis des éléments d'outillage 10, 20 est assuré et garanti dans la durée par un appareillage comportant des dispositifs de positionnement 100 associés aux éléments 10, 20 et réalisés en des matériaux métalliques présentant des caractéristiques de résistance mécanique et de dureté supérieures à celles du matériau des éléments d'outillage 10, 20.

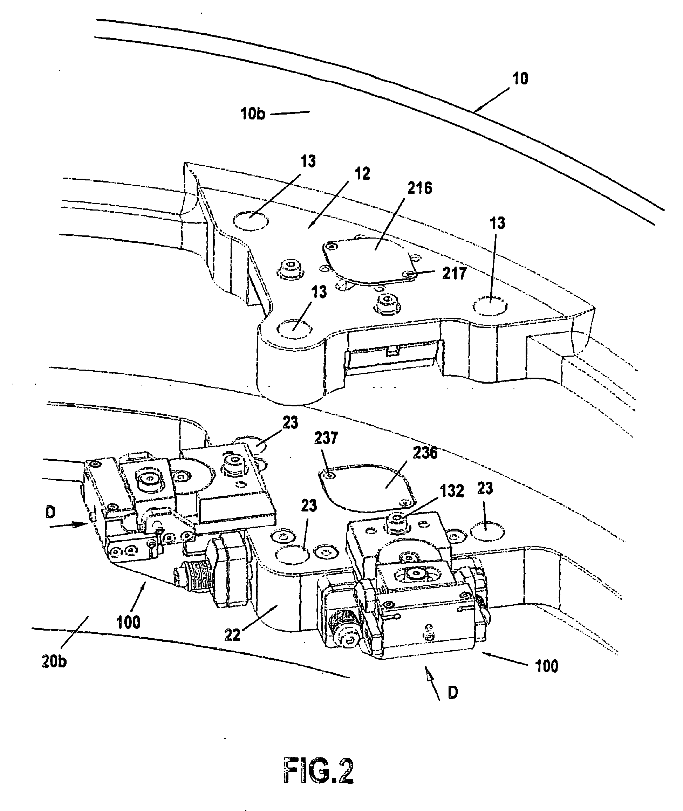

Dans le mode de réalisation des figures 1 et 2, les dispositifs de positionnement sont montés sur des brides formées en une seule pièce avec les éléments d'outillages 10, 20. Dans l'exemple illustré, l'élément d'outillage 10 comprend deux brides 12 qui s'étendent à partir de sa surface interne 10b en des emplacements sensiblement diamétralement opposés. De façon similaire, l'élément d'outillage 20 comprend deux brides 22 qui s'étendent à partir de sa surface interne 20b en des emplacements sensiblement diamétralement opposés.

Les brides 12, 22 ont même forme sensiblement triangulaire se raccordant par un côté à la face interne de l'élément d'outillage correspondant. Chaque bride 12 fait face à une bride 22 contre laquelle elle est appliquée au niveau du plan de joint P lorsque les éléments d'outillage 10, 20 sont assemblés. L'assemblage est réalisé au moyen de vis 30 (montrées uniquement sur la figure 1) qui sont engagées dans des perçages 13, 23 formés dans les brides 12, 22 parallèlement à l'axe A.

A chaque paire de brides 12, 22 sont associés deux dispositifs de positionnement 100 qui sont montés sur les faces latérales des brides pour agir dans des directions de positionnement parallèles au plan P et non parallèles entre elles.

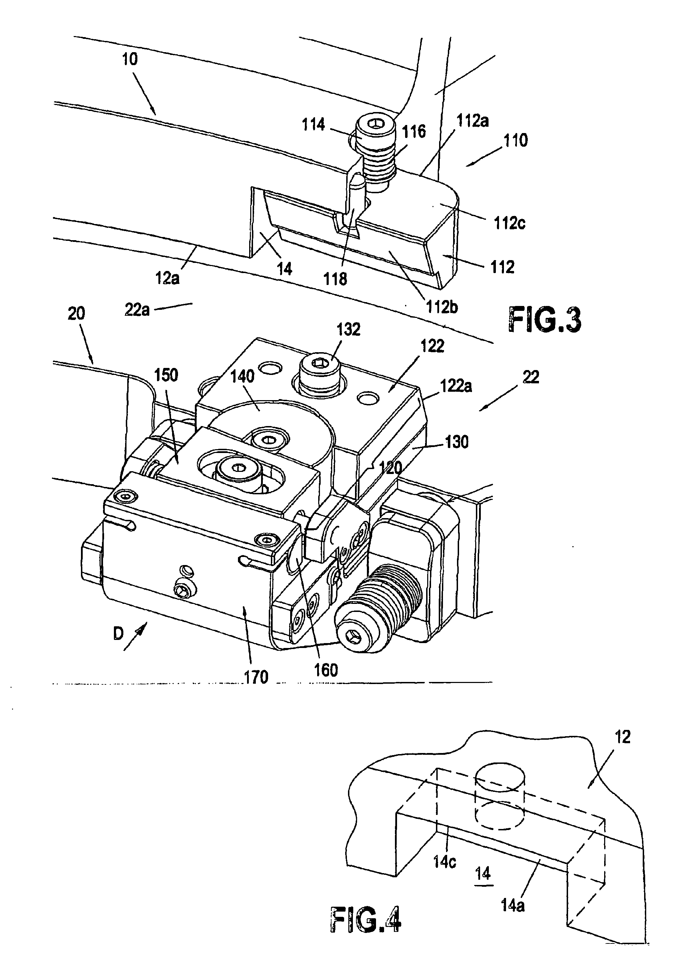

Comme le montre plus particulièrement la figure 3, chaque dispositif de positionnement 100 agissant dans une direction de positionnement D comprend une première partie 110 associée à une bride 12 de l'élément d'outillage 10, une deuxième partie 120 associée à la bride 22 en regard de l'élément d'outillage 20, une butée 160 et un corps de butée 170 portant la butée 160 et relié à une face latérale de la bride 22.

La première partie 110 est essentiellement formée d'un bloc 112 qui est engagé dans un logement 14 formé dans la face latérale de la bride 12. Le logement 14 (voir aussi figure 4) est formé sur une partie de l'épaisseur de la bride 12 à partir de sa face interne 12a destinée à venir au contact de la face interne 22a de la bride 22 située en regard.

Le bloc 112 présente une face d'appui avant 112a pour venir en contact avec la surface de fond 14a du logement 14 formant surface d'appui pour le bloc 112, la face 112a et la surface 14a s'étendant perpendiculairement à la direction D. Du côté arrière, le bloc 112 présente une face de contact 112b qui est inclinée par rapport à un plan perpendiculaire à la direction D.

Le bloc 112 est maintenu dans le logement 14 au moyen d'une vis épaulée 114 munie d'un ressort 116 qui permet d'appliquer la face supérieure 112c du bloc contre la surface supérieure 14c du logement 14 (on notera que les termes "supérieur" et "inférieur" sont utilisés ici arbitrairement dans la direction de l'axe A, l'élément 10 étant l'élément supérieur et l'élément 20 étant l'élément inférieur). Le bloc 112 n'est toutefois pas immobilisé par appui sur la surface 14c. Une goupille 118 est engagée dans un trou formé dans la surface 14c et dans un évidement formé dans la face supérieure 112c du bloc 112 à partir de la face de contact arrière 112b. La goupille 118 permet de positionner latéralement le bloc 112 par rapport à l'axe général du dispositif 100 tout en autorisant le bloc 112 à pivoter afin d'assurer un contact parfait entre la face d'appui avant 112a et la surface d'appui 14a.

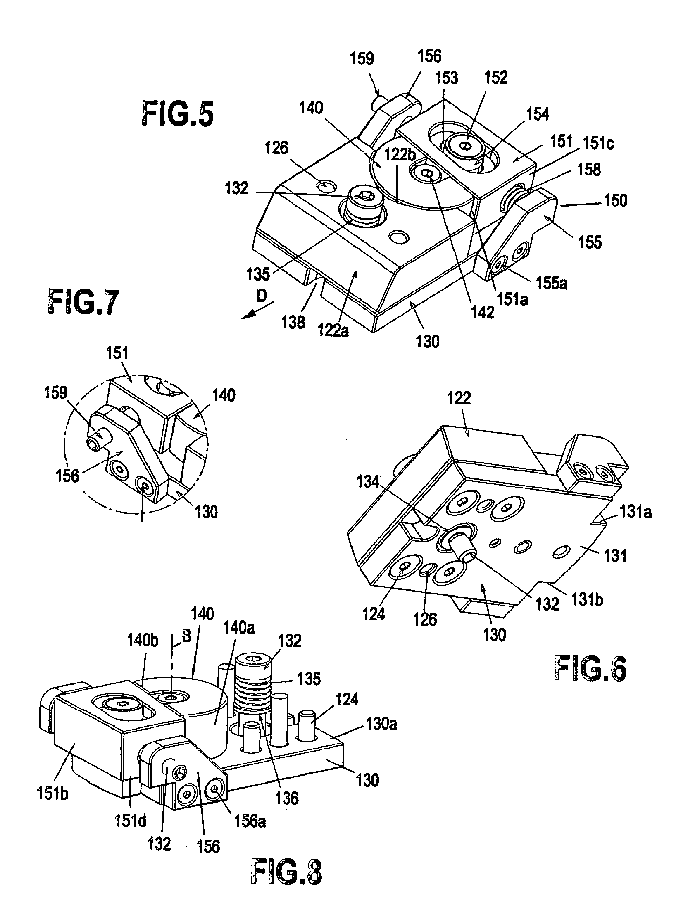

La deuxième partie 120 (voir aussi figures 5 à 8) comprend un bloc 122 monté sur une platine 130 laquelle supporte aussi un correcteur de géométrie 140 et un mécanisme de rattrapage de jeu 150.

Le bloc 122 (omis sur la figure 8) présente une face de contact avant 122a pour venir en contact avec la face de contact arrière 112b du bloc 112. La face de contact 122a est inclinée par rapport à un plan perpendiculaire à la direction D en faisant avec ce plan un angle égal à celui que fait la face 112b.

Le bloc 122 est fixé sur la platine 130 au moyen de vis 124 en étant positionné au moyen de goupilles 126 qui sont logées dans des trous formés à la surface supérieure 130a de la platine 30 et qui pénètrent dans des trous formés dans le bloc 122.

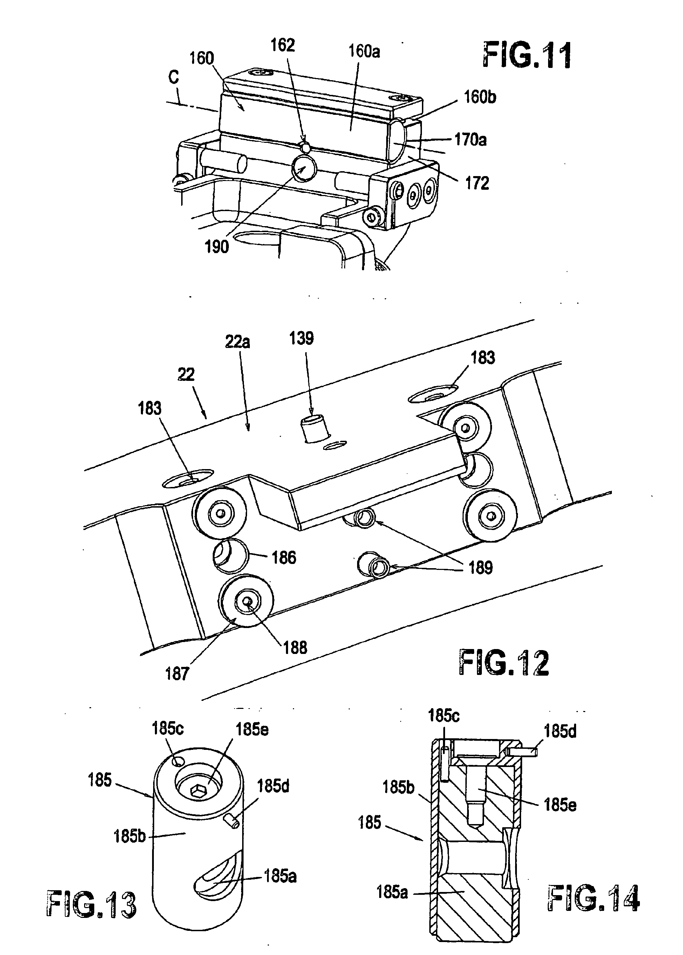

La platine 130 est fixée à sa partie avant sur la bride 22 au moyen d'une vis épaulée 132 qui traverse le bloc 122 et la platine 130, la face inférieure de la platine 130 venant au contact de la face supérieure de la bride 22. La vis 132 est munie d'une rondelle d'appui 134 et d'un ressort de pression 135 pour exercer une poussée sur le bloc 122 par l'intermédiaire d'une rondelle 136 afin de plaquer la platine 130 contre la face interne 22a de la bride 22. La platine 130 présente un logement 138 formé à partir de sa face avant et dans lequel pénètre une goupille 139 insérée dans un trou formé dans la face 22a de la bride 22 (figure 12), bloquant la platine 130 latéralement par rapport à l'axe général du dispositif 100 tout en autorisant une rotation autour de la goupille 139 afin d'assurer un contact parfait de la face 122a du bloc 122 avec la face 112b du bloc 112.

Le correcteur de géométrie 140 est sous forme d'un bloc ayant une face avant cylindrique 140a d'axe B perpendiculaire à la surface supérieure 130a de la platine 130 et une face arrière plane 140b dans un plan perpendiculaire à la surface 130a. Le bloc 140 est monté sur la platine 130 au moyen d'une vis épaulée 142 de façon à pouvoir pivoter autour de l'axe B. La face avant cylindrique 140a du bloc 140 s'engage dans un évidement cylindrique de forme correspondante formé dans la face arrière du bloc 122. Ainsi le bloc 140 peut pivoter autour de l'axe B tout en ayant sa face 140a au contact de la surface cylindrique 122b de l'évidement formé à l'arrière du bloc 122, permettant une correction de géométrie dans un plan perpendiculaire à la direction de positionnement D, autour d'un axe sensiblement perpendiculaire au plan P.

Le mécanisme de rattrapage de jeu 150 comprend une cale biseautée 151 fixée sur la platine 130 au moyen d'une vis 152. La vis 152 traverse un passage en forme de lumière 153 formé dans la cale 151 et s'étendant dans une direction perpendiculaire à la direction de positionnement D. La vis 152 est munie d'une rondelle 154 permettant d'appliquer la cale 150 contre la surface supérieure 130a de la platine 130.

La cale 151 est maintenue latéralement entre deux joues 155, 156 fixées sur la platine 130 au moyen de vis 155a, 156a. Du côté d'une face latérale 151c de la cale 151, un ressort 158 est disposé entre la face interne de la joue 155 et un épaulement interne (non montré) de la cale 151 tandis que, du côté opposé, la face latérale 151d de la cale 151 peut venir en appui contre l'extrémité d'une vis 159 vissée dans la joue 156.

La cale 151 a une face avant 151a perpendiculaire à la surface 130a de la platine 130 tout en étant inclinée par rapport à un plan perpendiculaire à la direction de positionnement D, et une face arrière d'appui 151b sensiblement perpendiculaire à la direction de positionnement D. La face avant 151a vient au contact de la face plane arrière 140b du bloc 140.

La butée 160 est constituée par un barreau en forme de secteur de cylindre d'axe C perpendiculaire à la direction de positionnement D et sensiblement parallèle au plan P. Le barreau 160 a une face avant plane de butée 160a qui vient en contact avec la face arrière d'appui 151b de la cale 151. La face arrière cylindrique 160b du barreau 160 est engagée dans un logement correspondant ménagé dans une partie 172 formant talon du corps de butée 170 de sorte que le barreau 160 peut pivoter autour de son axe C tout en maintenant un contact entre la face cylindrique 160b et la surface cylindrique correspondante 170a du logement formé dans le talon 172 du corps de butée 170. Une goupille 162 permet de maintenir le barreau 160 en position le long de son axe, avec un jeu suffisant pour autoriser le pivotement du barreau, la goupille 162 s'étendant perpendiculairement à l'axe C dans des logements formés en vis-à-vis dans le barreau 160 et le corps de butée 170.

Le barreau 160 permet ainsi une correction de géométrie dans un plan perpendiculaire à la direction de positionnement D autour d'un axe sensiblement parallèle au plan P, le bloc 140 permettant une correction de géométrie autour d'un axe perpendiculaire au précédent. La partie 172 du corps de butée présente des fentes 172a, 172b qui s'étendent sur une distance limitée à partir des faces latérales de la partie 172 dans la direction de l'axe C, au niveau du logement de la butée 160. Des vis 173a, 173b sont disposées à travers les fentes 172a, 172b pour permettre un blocage en rotation du barreau 160 par pincement.

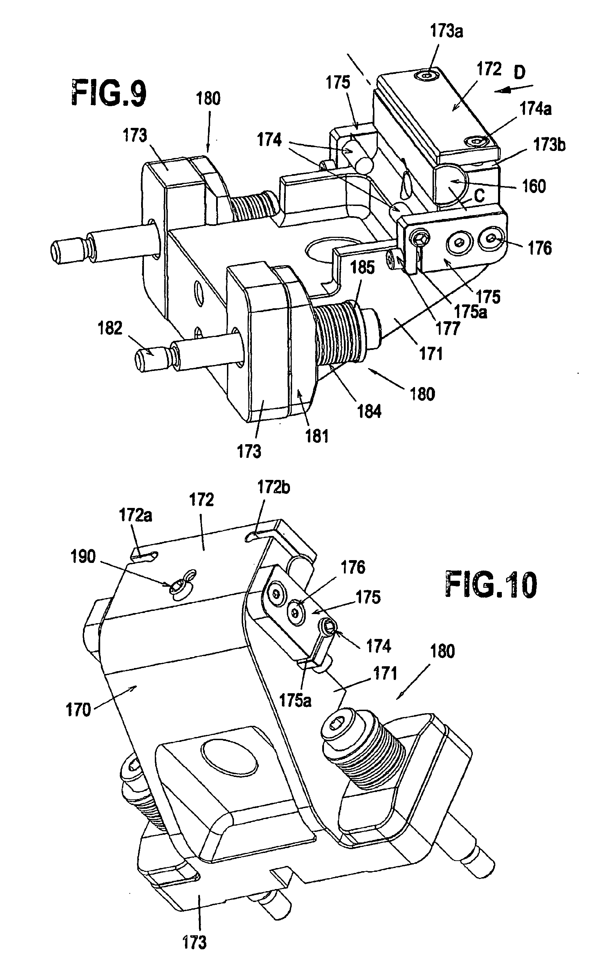

Le corps de butée 170 (figures 9 à 11) porte un dispositif de correction d'alignement entre les parties 110 et 120 du dispositif de positionnement. Ce dispositif de correction d'alignement comprend deux poussoirs latéraux qui s'étendent sensiblement parallèlement à l'axe C. Les poussoirs 174 sont portés par des supports respectifs 175 sous forme de plaques fixées sur les faces latérales du corps de butée 170 par des vis 176. Les poussoirs sont engagés dans des trous qui sont formés dans les supports 175 et dans lesquels débouchent des fentes 175a permettant un blocage des poussoirs par pincement au moyen de vis 177. Les poussoirs 174 agissent, lorsque le dispositif de positionnement est monté, sur les extrémités latérales 131a, 131b de la partie d'extrémité arrière 131 de largeur réduite de la platine 130 (figure 6).

Le corps de butée 170 comprend une semelle 171 qui est munie à son extrémité avant de deux oreilles 173 pour sa fixation sur la face latérale 22b de la bride 22 de l'élément d'outillage 20 au moyen d'ensembles de bridage respectifs 180. A son extrémité arrière, la semelle 171 est coudée pour former le talon 172.

Chaque dispositif de bridage 180 comprend une bride 181 qui est appliquée contre la face externe d'une oreille respective 173 au moyen d'une vis épaulée 182 vissée dans un écrou cylindrique semi-rotatif 183 inséré dans un logement formé dans la bride 22 (figures 12-14). Chaque écrou 183 comprend un corps d'écrou 183a logé dans un fourreau 183b engagé dans le logement formé dans la bride 22. Une goupille 183c limite la rotation du corps d'écrou dans le fourreau tandis qu'une goupille 183d bloque le fourreau en rotation dans son logement. Le maintien axial du corps d'écrou 183a dans le fourreau 183b est assuré par une vis 183e.

La vis 182 exerce une pression sur la bride 181 par compression d'un empilage de rondelles "Belleville" 184 au moyen d'une rondelle 185. Les rondelles "Belleville" 184 pourraient être remplacées par un ressort.

La face latérale de la bride 22 (figure 12) est équipée de rondelles ou patins d'appui 187 fixés par des vis 188, la semelle 171 du corps de butée s'appuyant par les oreilles 173 sur les rondelles d'appui 187. Des goupilles de centrage 189 définissent le positionnement du corps de butée sur la bride 22 en pénétrant dans des orifices formés dans la face latérale 22b de la bride 22 et des orifices correspondants 171b formés dans la face avant 171a de la semelle 171.

Une vis poussoir 190 est implantée dans le talon 172 du corps de butée pour pouvoir appliquer les parties 120 et 110 du dispositif de positionnement l'une contre l'autre dans la direction de positionnement D lors du réglage initial du dispositif de fonctionnement pendant la procédure de mise en service, comme décrit plus loin.

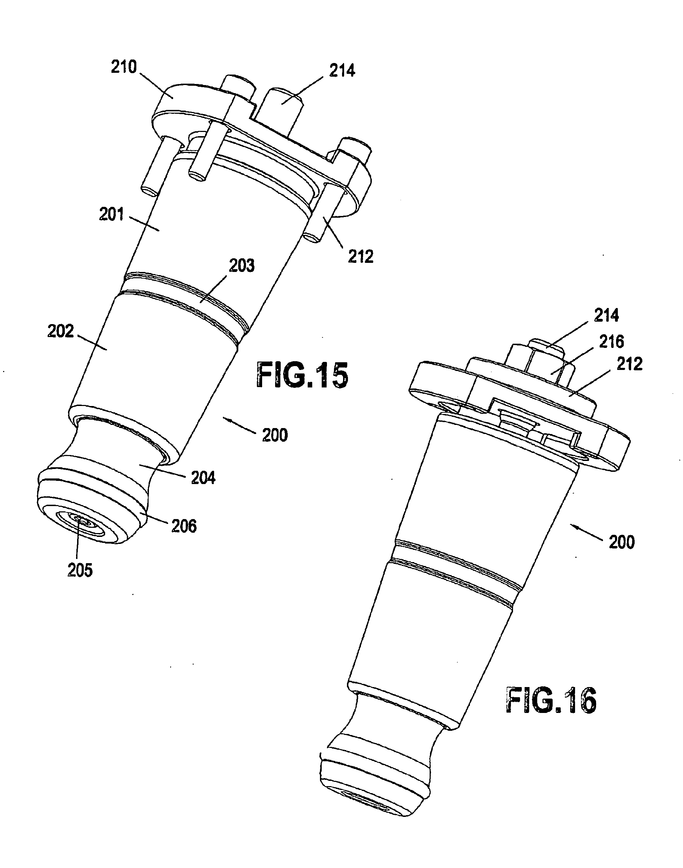

En vue du réglage initial des dispositifs de positionnement 100, un assemblage des éléments d'outillage 10 et 20 est réalisé avec mise en place d'organes de positionnement référentiels dans des logements de référence de positionnement formés en vis-à-vis dans les brides 12 et 22. On se référera maintenant aux figures 15 à 21.

Les organes de positionnement référentiels comprennent deux broches métalliques tronconiques, une 200 à portée complète et l'autre 220 à portée dégagée.

La figure 15 montre la broche 200 tronconique à portée complète avec une première partie 201 destinée à se loger dans un logement de forme correspondante formé dans une bride 12 et une deuxième partie 202 destinée à se loger dans un logement de forme correspondante formé dans une bride 22, les parties 201 et 202 étant séparées par une gorge 203. A son extrémité inférieure, la broche 200 est munie d'un embout de protection 204 par exemple en matière plastique fixé au moyen d'une vis 205. L'embout de protection 204 est muni d'un jonc élastique 206 à sa périphérie de plus grand diamètre.

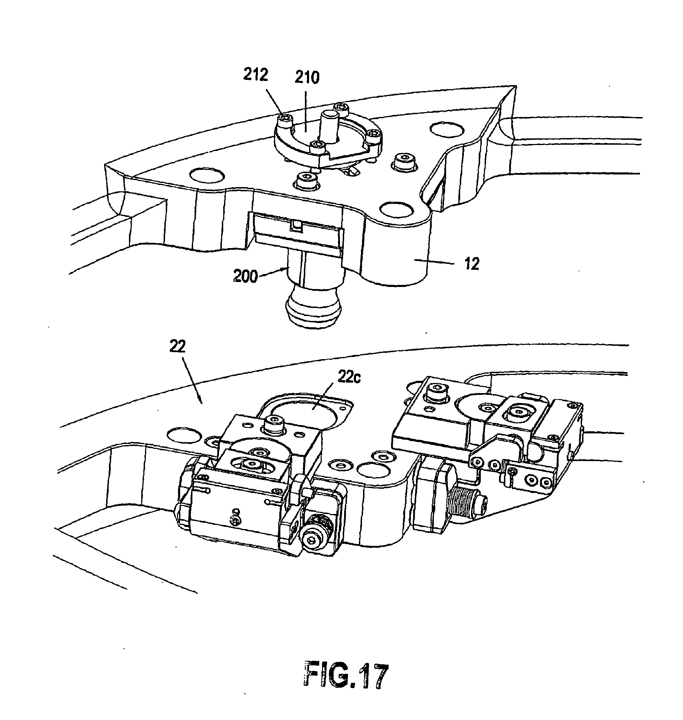

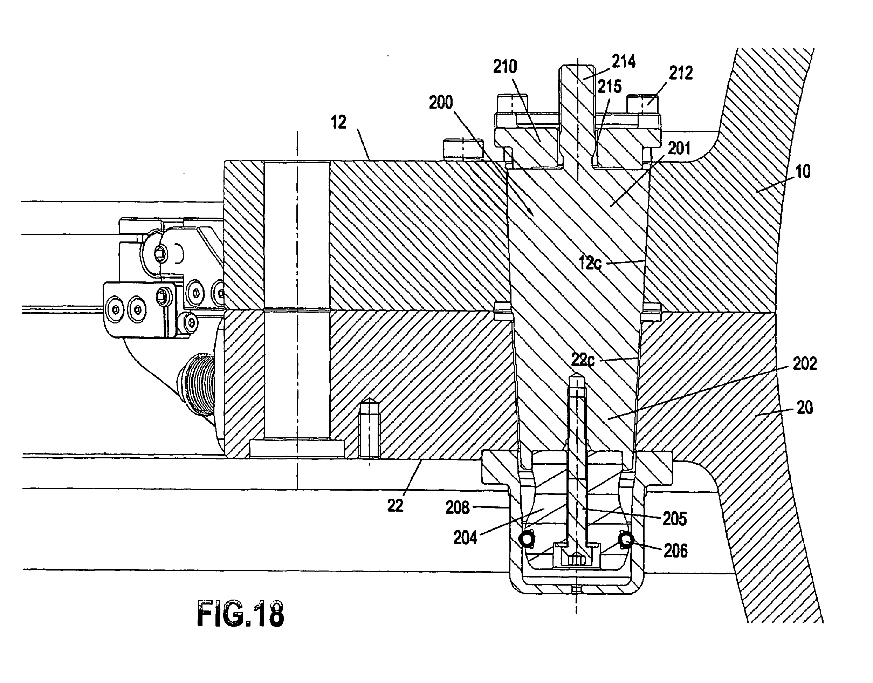

Le montage de la broche 200 est réalisé au moyen d'un flasque 210. La broche 200 est insérée dans le logement 12c de la bride 12 et maintenue sans jeu dans ce logement par le flasque 210 qui exerce un appui sur l'extrémité supérieure de la broche 200 en étant fixé sur la bride 12 au moyen de vis 212 (figures 17, 18). La partie 202 de la broche 200 pénètre dans le logement correspondant 22c de la bride 22 par assemblage des éléments d'outillage 10 et 20 (figure 18). Un guide de protection 208 peut être fixé du côté externe de la bride 22 pour coopérer avec le jonc élastique 206 afin d'assurer une fonction de pré-centrage et d'amortisseur et d'éviter une collision entre la broche 200 et la paroi du logement 22c.

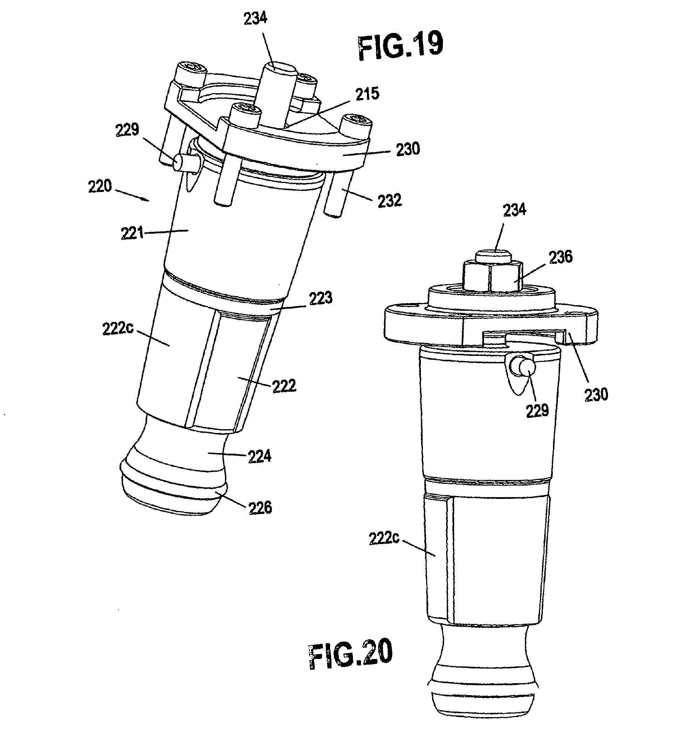

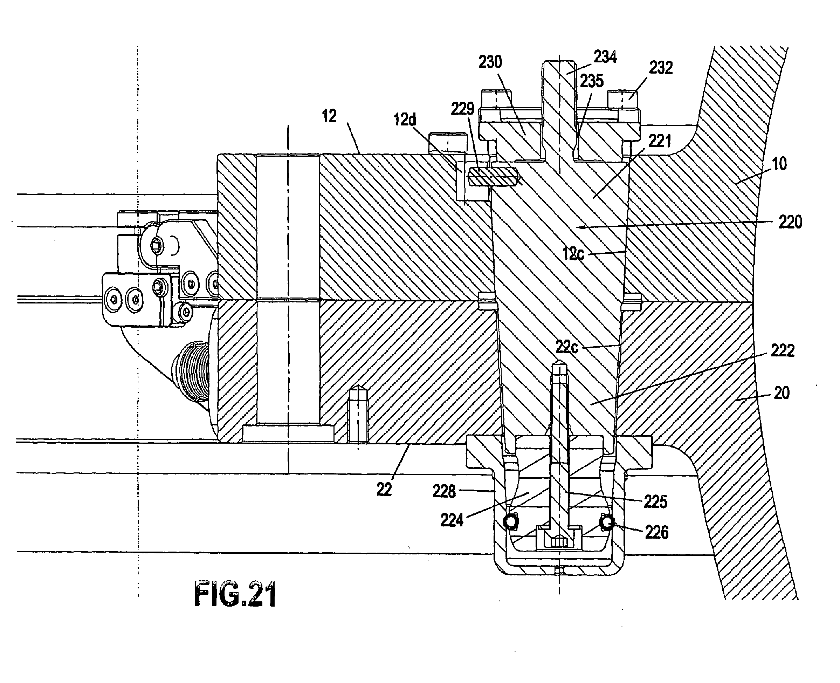

La figure 19 montre la broche 220 tronconique à portée dégagée avec une première partie 221 destinée à se loger dans un logement de forme correspondante d'une bride 12 et une deuxième partie 222 destinée à se loger dans un logement de forme correspondante formé dans une bride 22, les parties 221 et 222 étant séparées par une gorge 223. A son extrémité inférieure, la broche 220 est munie d'un embout de protection 224 similaire à l'embout 204 décrit plus haut, portant un jonc élastique 226 coopérant avec un guide de protection 228 fixé du côté externe de la bride 22 (figure 21) et semblable au guide de projection 208 décrit plus haut.

Le montage de la broche 220 est réalisé au moyen d'un flasque 230 semblable au flasque 210 décrit plus haut, fixé à la bride 12 par des vis 232.

La broche 220 se distingue de la broche 200 notamment en ce que la portée entre la partie 222 et le logement 22c formé dans la bride 22 est limitée à deux parties opposées à la périphérie de la broche 220 séparées par des évidements 222c qui occupent la majeure partie de la périphérie. En effet, l'utilisation de deux broches à portée complète conduirait à un assemblage hyperstatique, et la broche 220 n'a pour fonction que de bloquer les éléments d'outillage 10, 20 en rotation autour de l'axe de la broche 200. Aussi, la broche 220 doit être mise en place dans une position prédéterminée autour de son axe, ce qui est obtenu grâce à une goupille d'indexage 229 implantée radialement à l'extrémité supérieure de la partie 221 et pénétrant dans un logement 12d formé dans la bride 12 (figure 21).

Lorsque les deux éléments d'outillage ont été assemblés avec les organes de positionnement référentiels et reliés par les vis 30 et que les dispositifs de positionnement 100 ont été réglés, les organes de positionnement référentiels sont retirés. Pour réaliser leur extraction, les flasques 210, 230 sont retirés après enlèvement des vis 212, 232 et comme montré sur les figures 16 et 20, sont retournés. Les broches 200, 220 sont munies d'une tige filetée 214, 234 qui fait saillie à partir de la partie centrale de leur extrémité supérieure et passent à travers une ouverture centrale 215, 235 du flasque 210, 230. Par vissage d'un écrou 216, 236 s'appuyant sur le flasque 210, 230 autour de l'ouverture 215, 235 et faisant s'appuyer le flasque 210, 230 sur la paroi externe de la bride 12, un effort est exercé permettant l'extraction de la broche 200, 220. Les logements des broches 200, 220 dans les brides 12, 22 sont protégés par des obturateurs 216, 236 fixés par des vis 217, 237 (figure 2).

La procédure de mise en service de l'outillage comprend d'une façon générale la mise en place des organes de positionnement référentiels 200, 220 sur les deux brides 22, la mise en place des parties 110 des dispositifs de positionnement 100 sur les brides 12, la mise en place des corps de butée 170 et butées 160 sur les brides 22, la mise en place des parties 120 des dispositifs de positionnement 100 sur les brides 22, l'assemblage des éléments d'outillages 10, 20 et leur fixation mutuelle par les vis 30, le réglage des dispositifs de positionnement 100 et le retrait des organes de positionnement référentiel 200, 220, l'outillage étant alors prêt pour être utilisé de façon répétée, la séparation entre les éléments 10, 20 et leur assemblage ne nécessitant que l'enlèvement et la remise en place des vis 30.

Plus précisément, la procédure de mise en service comprend les opérations suivantes :

- montage des broches 200, 220 avec les flasques 210, 230 en position de bridage sur les brides 12 de l'élément d'outillage 10 ;
- montage des parties 110 des dispositifs de positionnement sur les brides 12 de l'élément d'outillage 10 ;
- montage des corps de butée 170 équipés avec les butées 160 sur les brides 22 de l'élément d'outillage 20 ;
- libération des butées 160 par desserrage des vis 174a, 1744b ;
- recul des vis poussoirs 190 en position arrière des surfaces de butée des barreaux 160 ;
- desserrage des vis 177 et écartement mutuel des poussoirs 174 ;
- léger desserrage des vis 152 pour libérer les cales biseautées 151 ;
- poussée des cales biseautées 151 au moyen des vis 159 pour amener leurs faces latérales 151c à proximité immédiate de la joue 155 (de sorte qu'un jeu maximum est ménagé entre la cale 151 et la face arrière 140b du bloc 140) ;
- positionnement des parties 120 des dispositifs de positionnement 100 sur les brides 22 de l'élément d'outillage 20 ;
- application des parties 120 des dispositifs de positionnement contre les butées 160 et blocage des vis 132 de fixation de ces parties 120 sur les brides 122 et des vis 152 de blocage des cales biseautées 151 ;
- desserrage des vis 159 agissant latéralement sur les cales biseautées 151 ;
- positionnement des éléments d'outillage 10, 20 l'un contre l'autre ;
- mise en place et serrage des vis d'assemblage 30 pour relier les éléments d'outillage 10, 20 ;

- plaquage des parties 110 et 120 des dispositifs de positionnement les unes contre les autres au moyen des vis poussoirs 190 ;
- amenée des poussoirs 174 au contact des surfaces latérales 131a 131b de la platine 130, sans serrage ;
- immobilisation des poussoirs 174 par pincement par serrage des vis 177 ;
- desserrage des vis 152 pour libérer les cales biseautées 151 ;
- immobilisation des cales biseautées 151 dans la position qu'elles ont prises par serrage des vis 152 ;
- immobilisation des butées 160 par serrage des vis 174a, 174b ;
- amenée des vis 159 au contact des faces latérales 151c des cales biseautées avec léger serrage ;
- recul des vis poussoirs 190 en position arrière ;
- retrait des broches de positionnement référentiel 200, 220 au moyen des flasques 210, 230 comme décrit plus haut ;
- obturation des logements des broches 200, 220 du côté externe des brides 12, 22 au moyen d'obturateurs 216, 236 ;
- retrait des vis d'assemblage 30 ;
- séparation des éléments d'outillage 10, 20 ;
- obturation des logements des broches 200, 220 du côté interne des brides 12, 22 au moyen d'obturateurs 216, 236 ;
- positionnement des éléments d'outillage 10, 20 l'un contre l'autre ;
- mise en place des vis d'assemblage 30 ;
- serrage des vis d'assemblage 30 ; et
- contrôle du positionnement relatif des éléments d'outillage, la procédure devant être redémarrée si le positionnement n'est pas correct.

Comme déjà indiqué, l'invention est utile pour assurer et maintenir un positionnement relatif précis entre deux éléments assemblés en dépit d'une différence de coefficient de dilatation thermique entre le matériau des éléments assemblés et le ou les matériaux constituant les dispositifs de positionnement.

La figure 20 illustre de façon très schématique les composants 110, 150, 160 et 170 d'un dispositif de positionnement 100 tel que décrit ci-dessus montés sur les brides 12 et 22.

L'égalité suivante doit être sensiblement respectée pour éviter que les dilatations différentielles induisent des contraintes substantielles sur les éléments d'outillage :

$$L_3 = [H_1 \, \mathrm{tg}\alpha \, (D_2 - D_1) + D_2 L_2 - D_1 L_1]/D_3 \qquad (1),$$
$$\text{avec } L_3 = L_2 - L_1$$

- $L_3$ désignant la distance entre la surface latérale 22c de la bride 22 et la surface de butée 160a de la butée 160,
- $L_2$ désignant la distance entre la surface d'appui 112a et la surface de butée 160a,
- $L_1$ désignant la distance entre la surface d'appui 112a et la surface latérale 22c de la bride 22,
- $D_3$ désignant le coefficient de dilatation du matériau des éléments d'outillage 10, 20,
- $D_2$ désignant le coefficient de dilatation du matériau des parties 110 et 120 du dispositif de positionnement,
- $D_3$ désignant le coefficient de dilatation du matériau de la butée 160 et du corps de butée 170,
- $H_1$ désignant la hauteur du logement 14 formé dans la bride 12, et
- $\alpha$ désignant l'angle formé par les surfaces 112b et 122a par rapport à un plan perpendiculaire à la direction de positionnement D.

L'angle $\alpha$ est choisi pour permettre d'assurer une application du bloc 112 de la partie 110 du dispositif de positionnement contre la face supérieure de l'évidement 14 et de la platine 130 de la partie 120 du dispositif de positionnement contre la surface supérieure de la bride 22. Cet angle $\alpha$ est choisi de préférence supérieur à 15° par exemple entre 15° et 60°.

L'inégalité suivante doit être respectée :

$$D_3 > D_2 > D_1 \qquad (2)$$

A titre d'exemple, le matériau des parties 110, 120 des dispositifs de positionnement pourra être un acier, par exemple Z38CDV5 tandis que le matériau de la butée 160 et du corps de butée 170 pourra être du laiton, par exemple CuZn23Al4

Le coefficient de dilatation du matériau du corps de butée devant être élevé, une dilatation différentielle notable est produite dans un plan perpendiculaire à la direction de positionnement D entre la partie avant de la semelle 171 du corps de butée et la bride 22. Les systèmes de bridage utilisés pour la fixation du corps de butée autorisent un glissement relatif entre les rondelles d'appui 187 et les brides 183 grâce aux efforts modérés exercés par les rondelles "Belleville" 184, les vis 182 traversant les oreilles 173 avec jeu. En outre, les rondelles "Belleville" 184 absorbent les variations d'épaisseur des oreilles 173 dans la direction D.

On pourra bien entendu choisir pour les parties 110 et 120 des dispositifs de positionnement des matériaux différents l'un de l'autre, l'égalité (1) devant être adaptée en conséquence.

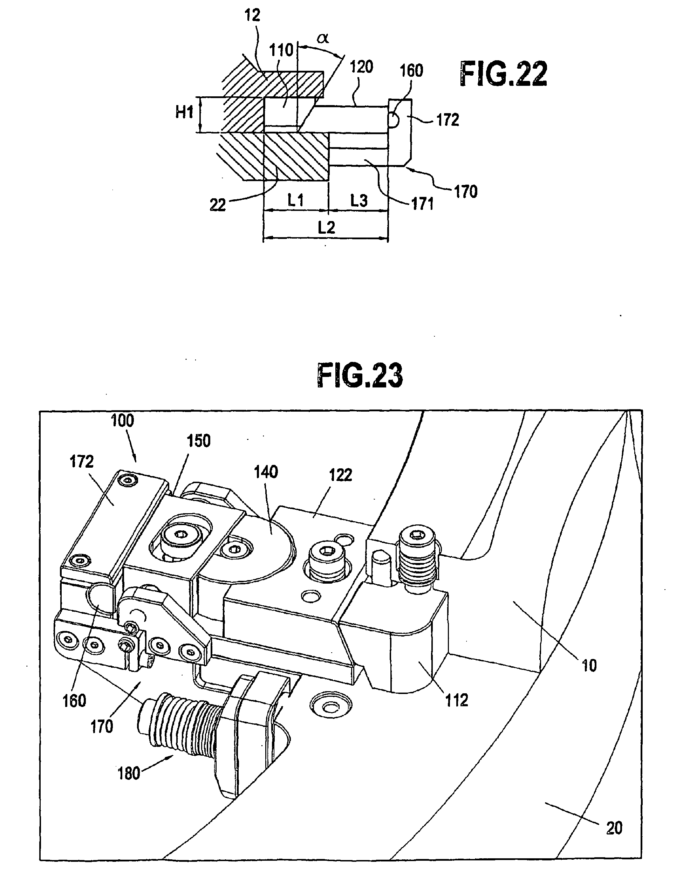

La figure 23 illustre une variante de réalisation selon laquelle les dispositifs de positionnement 100 (un seul est représenté) sont montés sur des rebords internes des éléments d'outillage 10, 20 sans être groupés par paire associée chacune à des brides de forme générale triangulaire.

Plusieurs dispositifs de positionnement sont alors répartis autour de l'axe des éléments d'outillage 10, 20, un nombre minimum de trois étant préférable. Il est préférable que l'écartement entre dispositifs de positionnement soit grand. Il est préférable en outre que les directions de positionnement D des différents éléments de positionnement ne concourent pas en un même point sur l'axe des éléments d'outillage.

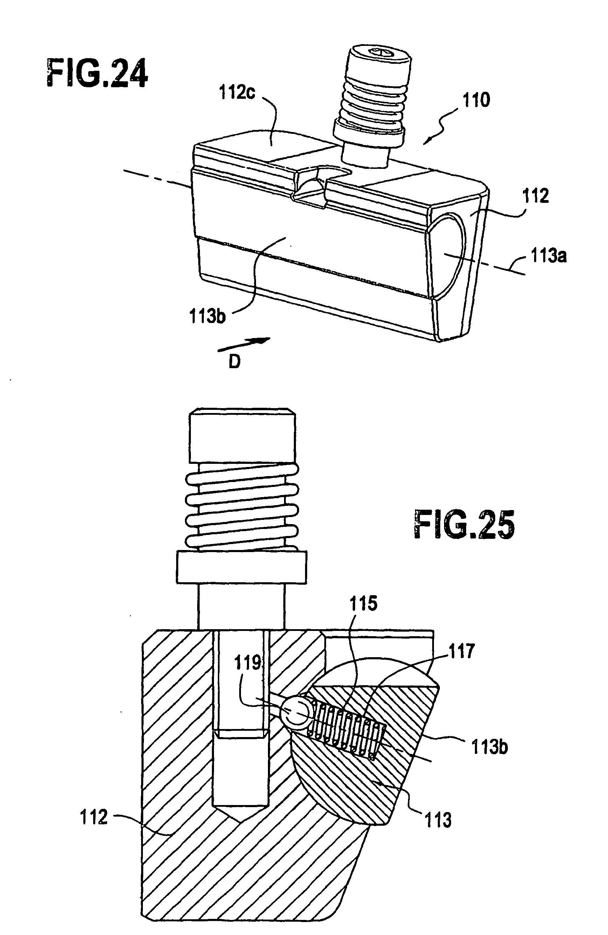

Les figures 24 et 25 illustrent une variante de réalisation de la première partie 110 d'un dispositif de positionnement qui se distingue de celle illustrée par la figure 3 par la présence d'un correcteur de géométrie dont la fonction est d'assurer un appui surfacique entre les faces de contact mutuel entre la première partie et la deuxième partie.

Le correcteur de géométrie comprend un cylindre ou rondin 113 avec méplat 1133b qui est maintenu dans un logement formé à l'arrière du bloc 112. Le logement s'ouvre à la face arrière inclinée 112b du bloc 112. Le cylindre 113 est monté dans son logement pour pouvoir tourner autour de son axe 113a qui est perpendiculaire à la direction de positionnement D et parallèle à la face supérieure 112c du bloc 112 par laquelle le bloc 112 est appliqué contre une face du premier élément d'outillage 10 (non montré sur les figures 24, 25).

Le rondin 113 fait saillie vers l'arrière hors de son logement par sa partie présentant le méplat 113b qui constitue la face de contact avec le bloc 122 (non montré) de la deuxième partie du dispositif de positionnement.

Le rondin 113 est rappelé élastiquement dans une position de base dans laquelle le méplat 113a est sensiblement parallèle à la face arrière 112b du bloc 112. A cet effet, un ressort 115 est monté dans un trou borgne 117 formé perpendiculairement à l'axe du rondin 113 et au méplat 113b à partir d'un emplacement opposé au méplat 113b. Le ressort 115 est précontraint en compression entre le fond du trou 117 et une bille 119 partiellement insérée dans le trou 117 et se logeant dans une cavité tronconique formée dans le fond du logement du rondin 113.

L'effort exercé par le ressort 115 sur la bille 119 permet de maintenir le rondin 113 dans sa position de base tout en autorisant une rotation du rondin 113 autour de son axe.

Lors du réglage du dispositif de positionnement, le bloc 122 de la partie 120 est plaqué contre le méplat 113b du rondin 113 qui s'oriente le cas échéant pour assurer un appui face contre face entre le méplat 113b et la face de contact 122a du bloc 122 (voir figure 3). Ainsi, même en cas de léger défaut de géométrie entre le plan de pose de la première partie 110 sur le premier élément d'outillage et le plan de pose de la deuxième partie 120 sur le deuxième élément d'outillage 120, on évite un contact limité de type linéique entre les deux parties du dispositif de positionnement.

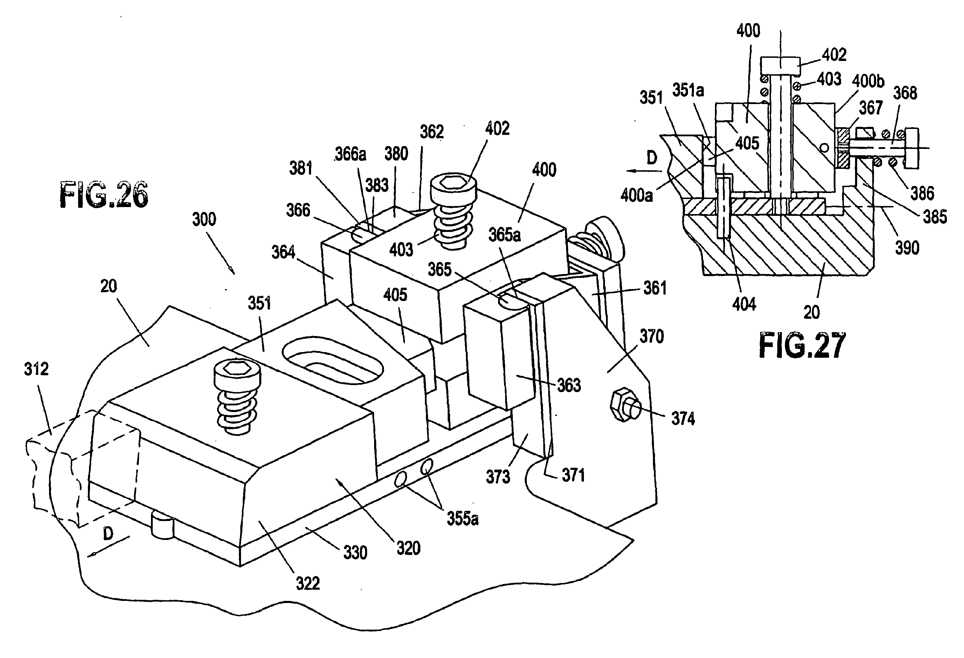

Les figures 26 et 27 illustrent très schématiquement un deuxième mode de réalisation de l'invention dans lequel chaque corps de butée d'un dispositif de positionnement est une partie de butée réalisée en une seule pièce avec l'élément d'outillage 20.

Chaque dispositif de positionnement 300 comprend une première partie (non représentée) du dispositif de positionnement 100 décrit plus haut, et une deuxième partie 320. La première partie est associée au premier élément d'outillage de la même façon que la partie 110. La deuxième partie 320 comprend d'avant en arrière un bloc 322 venant au contact d'un bloc 312 de la première partie et un mécanisme de rattrapage de jeu 350 avec une cale biseautée 351, le bloc 322 et la cale biseautée 350 étant montés sur une platine 330.

Le mécanisme de rattrapage de jeu 350 est semblable au mécanisme de rattrapage de jeu 150 décrit plus haut, la cale 350 étant maintenue entre deux joues (non représentées) fixées sur la platine 330, seuls les trous 355b permettant la fixation par vissage d'une joue sur la platine 330 étant visibles.

La partie de butée réalisée en une seule pièce avec l'élément d'outillage 20 comprend deux flasques latéraux 370, 380 situés de part et d'autre de la platine 330 et présentant des surfaces d'appui 371, 381 situées dans un même plan perpendiculaire à la direction de positionnement D, les surfaces d'appui 371, 381 étant tournées vers le bloc 322.

Entre la cale biseautée 351 et les surfaces d'appui 371, 381 est disposé un ensemble 400 comprenant une cale thermorétractable 400 montée dans un étrier 360. Les branches 361, 362 de l'étrier 360 se terminent par des parties ou oreilles 363, 364 faisant saillie vers l'extérieur et dans lesquelles sont formés des logements sensiblement semi-cylindriques. Des barreaux 365, 366 en forme de secteurs de cylindre sont disposés dans ces logements et leurs faces planes constituent des faces arrière d'appui 365a, 366a contre les surfaces d'appui 371, 381, éventuellement avec interposition de plaquettes 373, 383. Les barreaux 365, 366 constituent des éléments correcteurs de géométrie autour d'un axe perpendiculaire à la platine 330.

Dans l'exemple représenté, la cale biseautée 351 est en appui du côté avant sur le bloc 322 par une face de contact perpendiculaire à la direction de positionnement D. Du côté arrière, la cale biseautée 351 présente une face de contact 351a inclinée par rapport à un plan perpendiculaire à la direction de positionnement P. La face de contact 351a est en appui sur une face de contact avant 400a de la cale 400.

La cale 400 est maintenue sur la platine 330 au moyen d'une vis épaulée 402 qui traverse la cale 400 et se visse dans la platine 330 avec ressort de pression 403 entre la tête de la vis 402 et la surface supérieure de la cale 400. Une goupille 404 est logée dans un trou borgne formé dans une face de l'élément d'outillage 20 sur laquelle s'appuie la platine 330. La goupille 404 fait saillie à travers un trou de la platine 330 qu'elle traverse avec jeu et dans un logement formé par un évidement 401 à l'avant de la cale 400. La goupille 404 permet de positionner latéralement la cale 400 par rapport à l'ensemble 320 tout en autorisant une rotation autour de la goupille 404 de manière à assurer un appui aussi parfait que possible des faces arrière d'appui 365a et 366a des barreaux 365 et 366 contre les surfaces d'appui 371 et 381.

Le sommet 367 de l'étrier 360 est situé du côté de la face arrière 400b de la cale 400 et les branches 361, 362 s'étendent vers l'avant, à partir du sommet 367, le long de chaque face latérale de la cale 400. Les faces d'appui 365a 366a et surfaces d'appui 371, 381 sont ainsi décalées vers l'avant par rapport à la face arrière 400b de la cale 400.

Une vis 368 traverse un trou formé dans un talon arrière 385 solidaire de l'élément d'outillage 20 et se termine par une tige vissée dans un trou formé dans la partie centrale du sommet 367 de l'étrier 360. Un ressort de traction 386 est disposé entre la tête de la vis 368 et le talon 385. La vis 368 exerce ainsi un effort dirigé vers l'arrière pour assurer le placage des faces d'appui 365a, 366a des barreaux 365, 366 contre les surfaces d'appui 371, 381.

Une vis poussoir 390 est implantée dans le talon 385 et appuie sur la platine 330 pour pouvoir appliquer les deux parties du dispositif de positionnement 300 l'une contre l'autre lors du réglage du dispositif de positionnement pendant la procédure de mise en service.

Des vis poussoirs 374 vissées dans les flasques 370, 380 agissent sur la platine 330 pour corriger l'alignement entre les deux parties du dispositif de positionnement 300.

La cale thermorétractable 400 est conçue pour éviter que les dilatations d'origine thermique des composants métalliques 312, 322, 351, 405 et 360 du dispositif de positionnement se traduisent par des contraints sur les éléments d'outillage, c'est-à-dire pour maintenir sensiblement inchangée la position des faces d'appui 365a, 366a des barreaux 365, 366.

Ainsi, la cale 400 est formée d'un assemblage de plaquettes ou lames qui sont reliées alternativement à leurs extrémités par des liaisons articulées et qui sont alternativement en un matériau à relativement fort coefficient de dilatation et en un matériau à relativement faible coefficient de dilatation.

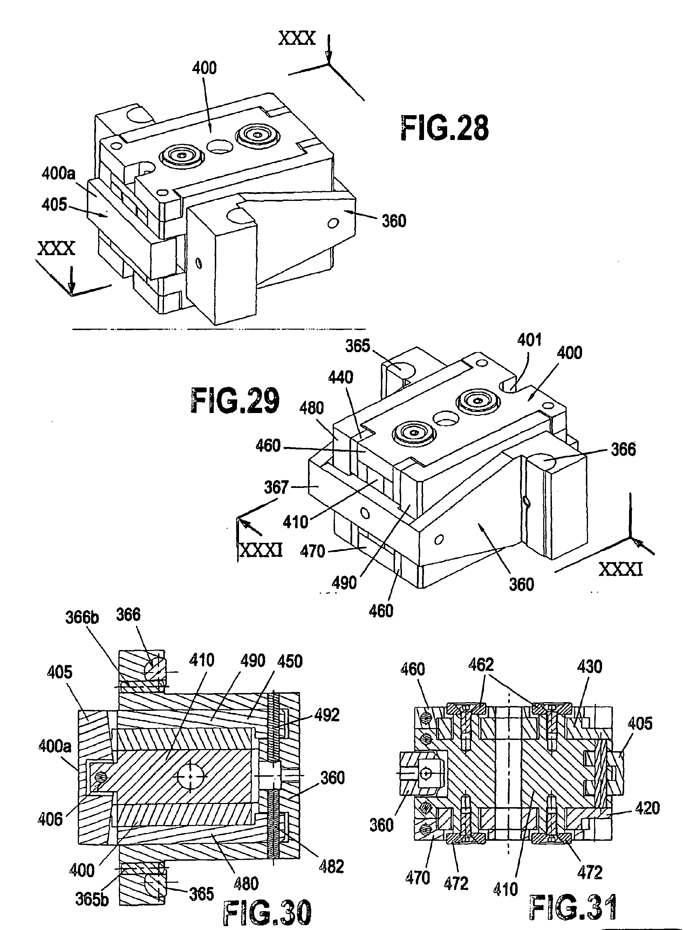

Dans l'exemple illustré (Figures 28 à 32), la cale 400 est symétrique par rapport à un plan parallèle à la direction de positionnement D et perpendiculaire à la platine 330.

La cale 400 comprend une plaquette centrale 410 qui a une face arrière 401 venant en appui contre le sommet 367 de l'étrier 360, du côté avant ou intérieur de l'étrier, et une face avant 402 avec des parties saillantes sur et entre lesquelles vient s'engager une pièce 405 avec liaison pivotante autour d'un axe 406 s'étendant selon une direction E perpendiculaire à la direction D (et à la platine 330). La face avant de la pièce 405 constitue la face de contact avant 400a de la cale 400.

A l'arrière, la pièce 405 a une face 405b formant un dièdre permettant une rotation limitée autour de l'axe 406. La pièce 405 constitue donc un correcteur de géométrie garantissant un contact surfacique entre la cale 400 et la cale biseautée 351.

Des plaquettes 420, 430 sont disposées sur les faces inférieure et supérieure de la plaquette 410. A leurs extrémités arrière, les plaquettes 410, 420, 430 sont munies d'oreilles permettant une liaison articulée autour d'axes 421, 431 selon une direction F perpendiculaire à la direction D (et parallèle à la platine 330).

Des plaquettes 440, 450 sont disposées sur les faces latérales des plaquettes 410, 420, 430. A leurs extrémités avant, les plaquettes 420, 430, 440, 450 sont munies d'oreilles permettant une liaison articulée autour d'axes 441, 451 parallèles à la direction E.

Des plaquettes 460, 470 sont disposées sur les faces supérieures et inférieures des plaquettes 440, 450. A leurs extrémités arrière, les plaquettes 440, 450, 460, 470 sont munies d'oreilles permettant une liaison articulée autour d'axes 461, 471 parallèles à la direction F.

Des plaquettes 480, 490 sont disposées sur les faces latérales des plaquettes 460, 470. A leurs extrémités avant, les plaquettes 460, 470, 480, 490 sont munies d'oreilles permettant une liaison articulée autour d'axes 481, 491 parallèles à la direction E.

En outre, les plaquettes 480, 490 sont reliées de façon articulée aux branches 361, 362 de l'étrier au moyen d'axes 482, 492 parallèles à la direction F et faisant fonction de correcteurs de géométrie au niveau de la liaison entre l'étrier 360 et la cale 400.

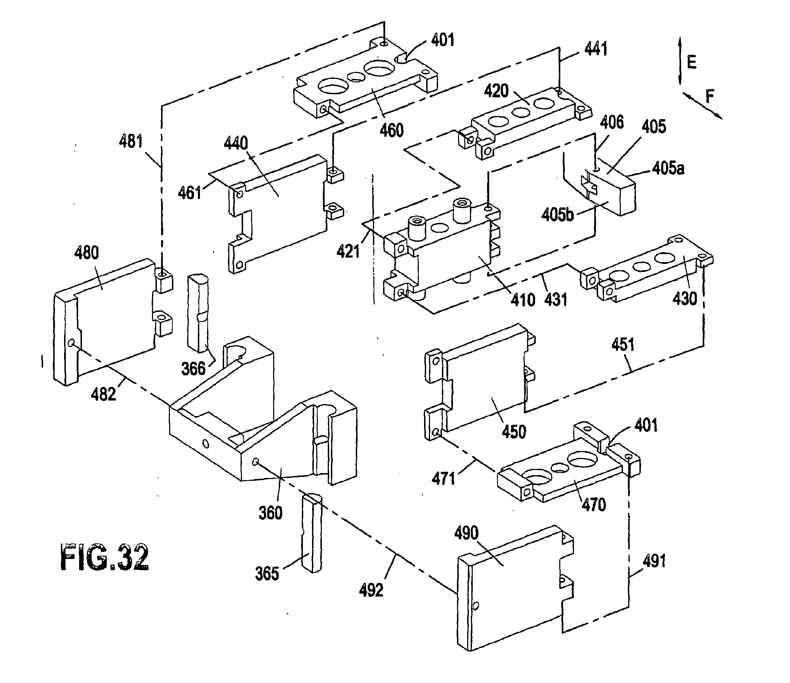

Sur la figure 32, les barreaux 365, 366 sont représentés. Des rainures sont formées dans les barreaux pour le logement de goupilles 365b, 366b (figure 30) permettant de limiter la rotation des barreaux dans leurs logements et de les maintenir en position dans la direction E.

Des patins sous forme de bagues 462, 472 sont partiellement engagés dans des trous formés dans les plaquettes 460, 470 et sont maintenus par vissage dans des plots sur les faces inférieure et supérieure de la plaquette 410. Les patins 462 constituent les surfaces de contact entre la cale 400 et la platine 330. On notera que la présence de patins 472 sur la face supérieure de la cale 400 n'est pas nécessaire mais permet la réversibilité de celle-ci.

Le matériau des pièces 410, 440, 450, 480, 490 et 405 est par exemple un acier, tel que l'acier Z38CDV5 tandis que le matériau des pièces 420, 430, 460, 470 et 360 est par exemple du laiton tel que CuZn23AI4. La dilatation supérieure des plaquettes 420, 430, 460, 470 a pour effet un déplacement relatif vers l'avant des faces d'appui 365a 366a des barreaux 365, 366.

La procédure de mise en service du dispositif de positionnement est similaire à celle décrite plus haut pour le mode de réalisation des figures 1 à 19.

## Revendications

1. Appareillage pour le maintien d'un premier élément (10) et d'un deuxième élément (20) dans une position relative précise selon un axe commun, l'appareillage comportant plusieurs dispositifs de positionnement (100) agissant dans des directions de positionnement (D) respectives différentes non parallèles à l'axe commun, chaque dispositif de positionnement comprenant :

   - une première partie (110) destinée à être associée au premier élément et ayant une face d'appui avant pour venir en contact avec une surface d'appui du premier élément perpendiculaire à la direction de positionnement et une face de contact arrière opposée à la face avant dans la direction de positionnement,
   - une deuxième partie (120) destinée à être associée au deuxième élément et ayant une face de contact avant pour venir en contact avec la face de contact arrière de la première partie et une face d'appui arrière opposée à la face de contact avant dans la direction de positionnement, et
   - une butée (170 ; 370, 380) ayant une face avant de butée pour venir en contact avec la face arrière d'appui de la deuxième partie, la butée étant portée par un corps de butée pour fixation au deuxième élément ou étant conçue pour être portée par une partie de butée faisant partie intégrante du deuxième élément,
   - les composants de la première partie, de la deuxième partie et de la butée destinés à venir en appui mutuel entre le premier et le deuxième élément, étant réalisés en des matériaux métalliques présentant des caractéristiques de résistance mécanique et de dureté supérieures à celles du matériau constitutif du premier et du deuxième élément, et
   - les dimensions desdits composants et leurs matériaux constitutifs étant tels que, parallèlement à la direction de positionnement, les variations dimensionnelles cumulées d'origine thermique desdits composants correspondent sensiblement à la variation de la distance entre la surface d'appui du premier élément et une surface du deuxième élément perpendiculaire à la direction de positionnement et supportant la butée ou le corps de butée.

2. Appareillage selon la revendication 1, **caractérisé en ce que** la face de contact arrière (112b) de la première partie et la face de contact avant (122a) de la deuxième partie sont inclinées d'un même angle non nul par rapport à un plan perpendiculaire à la direction de positionnement.

3. Appareillage selon l'une quelconque des revendications 1 et 2, **caractérisé en ce que** la première partie comprend un premier bloc (112) ayant lesdites faces d'appui avant et de contact arrière et la deuxième partie comprend un deuxième bloc (122) ayant ladite face avant de contact.

4. Appareillage selon la revendication 3, **caractérisé en ce qu'**il comprend un correcteur d'alignement du deuxième bloc par rapport au premier bloc permettant un contact étroit entre leurs faces de contact, le correcteur d'alignement comportant des butées réglables (174 ; 374) agissant sur des faces latérales du deuxième bloc ou d'une pièce solidaire de celui-ci.

5. Appareillage selon l'une quelconque des revendications 3 et 4, **caractérisé en ce qu'**il comprend des correcteurs de géométrie (140, 160 ; 365, 366, 405) interposés entre une face arrière du deuxième bloc opposée à la face avant de contact et le corps de butée ou la partie de butée, un premier correcteur de géométrie étant susceptible de pivoter autour d'un premier axe perpendiculaire à la direction de positionnement et un deuxième correcteur de géométrie étant susceptible de pivoter autour d'un deuxième axe perpendiculaire à la direction de positionnement et au premier axe.

6. Appareillage selon la revendication 5, **caractérisé en ce que** les correcteurs de géométrie sont sous forme de cylindres avec méplat.

7. Appareillage selon la revendication 6, **caractérisé en ce que** la deuxième partie du dispositif comprend une platine de support (130 ; 330) ayant une surface interne sur laquelle le deuxième bloc est disposé et une surface externe opposée à la surface interne dans une direction perpendiculaire à la direction de positionnement pour venir en contact avec une surface du deuxième élément parallèle à la direction de positionnement, et le premier correcteur de géométrie est monté sur ladite platine de support de manière à pouvoir pivoter autour d'un axe perpendiculaire à la direction de positionnement.

8. Appareillage selon l'une quelconque des revendications 3 à 7, **caractérisé en ce que** la première partie (110) comprend un correcteur de géométrie (113) portant la face de contact arrière de la première partie (110) et susceptible de pivoter par rapport au premier bloc (112) autour d'un axe perpendiculaire à la direction de positionnement pour garantir un appui face contre face entre la première partie (110) et la deuxième partie (120).

9. Appareillage selon l'une quelconque des revendications 1 à 8, **caractérisé en ce qu'**il comprend un mécanisme de rattrapage de jeu comportant une cale biseautée (151 ; 351) interposée entre la première partie et la butée, la cale biseautée ayant une face avant et une face arrière qui sont opposées dans la direction de positionnement et qui forment entre elles un angle non nul, et un organe exerçant sur la cale une force de rappel élastique dans une direction de rappel perpendiculaire à la direction de positionnement.

10. Appareillage selon les revendications 6 et 9, **caractérisé en ce que** la cale biseautée est insérée entre les correcteurs de géométrie pour venir au contact des méplats de ceux-ci par ses faces avant et arrière.

11. Appareillage selon l'une quelconque des revendications 9 et 10, **caractérisé en ce qu'**il comprend une pièce de neutralisation du mécanisme de rattrapage de jeu par action sur la cale biseautée dans un sens opposé à celui dans lequel s'exerce la force de rappel élastique.

12. Ensemble formé par un premier élément et un deuxième élément maintenus dans une position relative précise au moyen d'un appareillage selon l'une quelconque des revendications 1 à 10.

13. Ensemble selon la revendication 12 comprenant un premier élément (10) et un deuxième élément (20) se raccordant au niveau d'un plan de joint (P) perpendiculaire à un axe d'assemblage commun (A), **caractérisé en ce que** les dispositifs de positionnement (100) agissent dans des directions de positionnement relatif respectives (D) parallèles au plan de joint.

14. Ensemble selon l'une quelconque des revendications 12 et 13 constituant un outillage de moulage ou de conformation pour la réalisation de pièces en matériau composite.

15. Procédé de réalisation d'un ensemble formé par un premier élément et un deuxième élément maintenus dans une position relative précise comportant un appareillage selon l'une quelconque des revendications 1 à 11, le procédé étant **caractérisé en ce qu'**il comprend les étapes de :

- positionnement référentiel du premier élément et du deuxième élément au moyen d'organes de positionnement référentiel engagées dans des logements de référence de positionnement formés en vis-à-vis dans des parties adjacentes du premier et du deuxième élément,
- montage d'une pluralité de dispositifs de positionnement sur le premier et le deuxième élément dans un état non serré dans les directions de positionnement,
- assemblage du premier et du deuxième élément pour former ledit ensemble,
- réglage de chaque dispositif de positionnement dans sa direction de positionnement pour amener la première partie, la deuxième partie et la butée en contact mutuel et sans jeu entre le premier élément et le deuxième élément, et
- retrait des organes de positionnement référentiel.

**Claims**

1. Apparatus for holding a first element (10) and a second element (20) in an accurate relative position along a common axis, the apparatus including a plurality of positioning devices (100) acting in respective different positioning directions (D) that are not parallel to the common axis, each positioning device comprising:

· a first portion (110) for associating with the first element and having a front bearing face for coming into contact with a bearing surface of the first element that is perpendicular to the positioning direction, and a rear contact face opposite from the front face in the positioning direction;
· a second portion (120) for associating with the second element and having a front contact face for coming into contact with the rear contact face of the first portion, and a rear bearing face opposite from the front contact face in the positioning direction; and
· an abutment (170; 370, 380) having an abutment front face for coming into contact with the rear bearing face of the second portion, the abutment being carried by an abutment body for fastening to the second element or being designed to be carried by an abutment portion forming an integral part of the second element;
· the components of the first portion, of the second portion, and of the abutment that are to bear mutually between the first and second elements being made of metal material that presents characteristics of mechanical strength and hardness that are greater than the corresponding characteristics of the material constituting the first and second elements; and
· the dimensions of said components and their component materials being such that, parallel to the positioning direction, accumulated dimensional variations of thermal origin in said components correspond substantially to the variations in the distance between the bearing surface of the first element and a surface of the second element that is perpendicular to the positioning direction and that supports the abutment or the abutment body.

2. Apparatus according to claim 1, **characterized in that** the rear contact face (112b) of the first portion and the front contact face (122a) of the second portion are inclined at a common non-zero angle relative to a plane perpendicular to the positioning direction.

3. Apparatus according to claim 1 or claim 2, **characterized in that** the first portion comprises a first block (112) having said front contact face and said rear contact face, and the second portion comprises a second block (122) having said front contact face.

4. Apparatus according to claim 3, **characterized in that** it comprises an alignment corrector for correcting the second block relative to the first block that enables contact between their contact faces to be close, the alignment corrector including adjustable abutments (174; 374) acting on side faces of the second block or of a part secured thereto.

5. Apparatus according to claim 3 or claim 4, **characterized in that** it comprises shape correctors (140, 160; 365, 366, 405) interposed between a rear face of the second block opposite from the contact front face, and the abutment body or the abutment portion, a first shape corrector being suitable for pivoting about a first axis perpendicular to the positioning direction, and a second shape corrector being suitable for pivoting about a second axis perpendicular to the positioning direction and to the first axis.

6. Apparatus according to claim 5, **characterized in that** the shape correctors are in the form of cylinders having respective flats.

7. Apparatus according to claim 6, **characterized in that** the second portion of the device comprises a support plate (130; 330) having an inside surface on which the second block is placed, and an outside surface opposite from the inside surface in a direction perpendicular to the positioning direction for coming into contact with a surface of the second element parallel to the positioning direction, and the first shape corrector is mounted on said support plate in such a manner as to be capable of pivoting about an axis perpendicular to the positioning direction.

8. Apparatus according to any one of claims 3 to 7, **characterized in that** the first portion (110) comprises a shape corrector (113) carrying a rear contact face of the first portion (110) and suitable for pivoting relative to the first block (112) about an axis perpendicular to the positioning direction in order to guarantee face-against-face bearing between the first portion (110) and the second portion (120).

9. Apparatus according to any one of claims 1 to 8, **characterized in that** it comprises a slack-takeup mechanism comprising a chamfered spacer (151; 351) interposed between the first portion and the abutment, the chamfered spacer having a front face and a rear face that are opposite in the positioning direction and that form between them a non-zero angle, and a member exerting a resilient return force on the spacer in a return direction perpendicular to the positioning direction.

**10.** Apparatus according to claims 6 and 9, **characterized in that** the chamfered spacer is inserted between the shape correctors in order to come into contact with the flats thereof via its front and rear faces.

**11.** Apparatus according to any one of claims 9 and 10, **characterized in that** it comprises a part for neutralizing the slack-takeup mechanism by acting on the chamfered spacer in a direction opposite to that in which the resilient return force is exerted.

**12.** An assembly formed by a first element and a second element held in an accurate relative position by means of apparatus according to any one of claims 1 to 10.

**13.** An assembly according to claim 12, comprising a first element (10) and a second element (20) connected together via a join plane (P) perpendicular to the common assembly axis (A), the assembly being **characterized in that** the positioning devices (100) act in respective relative positioning directions (D) that are parallel to the join plane.

**14.** An assembly according to claim 12 or claim 13, constituting molding or shaping tooling for making composite material parts.

**15.** A method of making an assembly formed by a first element and a second element held in an accurate relative position, and including apparatus according to any one of claims 1 to 11, the method being **characterized in that** it comprises the steps of:

· reference positioning of the first element and of the second element by means of reference positioning members engaged in reference positioning housings formed facing one another in adjacent portions of the first and second elements;
· mounting a plurality of positioning devices on the first and second elements in a non-tight state in the positioning directions;
· assembling the first and second elements together to form said assembly;
· adjusting each positioning device in its positioning direction to bring the first portion, the second portion, and the abutment into mutual contact without slack between the first element and the second element; and
· removing the reference positioning members.


**Patentansprüche**

**1.** Einrichtung zum Halten eines ersten Elements (10) und eines zweiten Elements (20) in einer präzisen Relativposition entlang einer gemeinsamen Achse, wobei die Einrichtung mehrere Positionierungsvorrichtungen (100) umfaßt, die in jeweiligen unterschiedlichen, zu der gemeinsamen Achse nicht parallelen Positionierungsrichtungen (D) wirken, wobei jede Positionierungsvorrichtung umfaßt:

- ein erstes Teil (110), das dazu bestimmt ist, mit dem ersten Element verbunden zu werden, und das eine vordere Anlagefläche, um mit einer zur Positionierungsrichtung senkrechten Anlagefläche des ersten Elements in Kontakt zu gelangen, sowie eine hintere Kontaktfläche aufweist, die der vorderen Fläche in Positionierungsrichtung gegenüberliegt,
- ein zweites Teil (120), das dazu bestimmt ist, mit dem zweiten Element verbunden zu werden, und das eine vordere Kontaktfläche, um mit der hinteren Kontaktfläche des ersten Teils in Kontakt zu gelangen, sowie eine hintere Anlagefläche aufweist, welche der vorderen Kontaktfläche in Positionierungsrichtung gegenüberliegt, und
- einen Anschlag (170; 370, 380), der eine vordere Anschlagfläche aufweist, um mit der hinteren Anlagefläche des zweiten Teils in Kontakt zu gelangen, wobei der Anschlag von einem Anschlagkörper zur Befestigung an dem zweiten Element getragen ist oder ausgelegt ist, um von einem Anschlagteil getragen zu werden, welches Bestandteil des zweiten Elements ist,
- wobei die Komponenten des ersten Teils, des zweiten Teils und des Anschlags, die dazu bestimmt sind, zwischen dem ersten und dem zweiten Element zur gegenseitigen Anlage zu kommen, aus Metallwerkstoffen gefertigt sind, die stärkere Eigenschaften mechanischer Festigkeit und Härte aufweisen als der Werkstoff, aus dem das erste und das zweite Element bestehen, und
- wobei die Abmessungen der Komponenten und die Werkstoffe, aus denen sie bestehen, derart sind, daß parallel zur Positionierungsrichtung die thermisch bedingten kumulierten Abmessungsänderungen der Komponenten im wesentlichen der Änderung des Abstandes zwischen der Anlagefläche des ersten Elements und einer Fläche des zweiten Elements, die zu der Positionierungsrichtung senkrecht verläuft und den Anschlag oder den Anschlagkörper trägt, entsprechen.

2. Einrichtung nach Anspruch 1, **dadurch gekennzeichnet, daß** die hintere Kontaktfläche (112b) des ersten Teils und die vordere Kontaktfläche (122a) des zweiten Teils um einen gleichen Winkel ungleich Null gegenüber einer zur Positionierungsrichtung senkrechten Ebene geneigt sind.

3. Einrichtung nach einem der Ansprüche 1 und 2, **dadurch gekennzeichnet, daß** das erste Teil einen ersten Block (112) umfaßt, der die vordere Anlagefläche und die hintere Kontaktfläche aufweist, und das zweite Teil einen zweiten Block (122) umfaßt, der die vordere Kontaktfläche aufweist.

4. Einrichtung nach Anspruch 3, **dadurch gekennzeichnet, daß** sie einen Korrektor zum Ausrichten des zweiten Blocks gegenüber dem ersten Block umfaßt, der einen engen Kontakt zwischen ihren Kontaktflächen ermöglicht, wobei der Ausrichtungskorrektor verstellbare Anschläge (174; 374) umfaßt, die auf Seitenflächen des zweiten Blocks oder eines mit diesem fest verbundenen Teils wirken.

5. Einrichtung nach einem der Ansprüche 3 und 4, **dadurch gekennzeichnet, daß** sie Geometriekorrektoren (140, 160; 365, 366, 405) umfaßt, die zwischen einer Rückseite des zweiten Blocks, welche der vorderen Kontaktfläche gegenüberliegt, und dem Anschlagkörper oder dem Anschlagteil angeordnet sind, wobei ein erster Geometriekorrektor geeignet ist, sich um eine zur Positionierungsrichtung senkrechte erste Achse zu drehen, und wobei ein zweiter Geometriekorrektor geeignet ist, sich um eine zur Positionierungsrichtung und zur ersten Achse senkrechte zweite Achse zu drehen.

6. Einrichtung nach Anspruch 5, **dadurch gekennzeichnet, daß** die Geometriekorrektoren in Form von Zylindern mit Abflachung vorliegen.

7. Einrichtung nach Anspruch 6, **dadurch gekennzeichnet, daß** das zweite Teil der Vorrichtung eine Tragplatte (130; 330) umfaßt, die eine Innenseite, auf der der zweite Block angeordnet ist, sowie eine Außenseite aufweist, die der Innenseite in einer Richtung senkrecht zur Positionierungsrichtung gegenüberliegt, um mit einer Fläche des zweiten Elements, die zur Positionierungsrichtung parallel verläuft, in Kontakt zu gelangen, und der erste Geometriekorrektor an der Tragplatte derart angebracht ist, daß er sich um eine zur Positionierungsrichtung senkrechte Achse drehen kann.

8. Einrichtung nach einem der Ansprüche 3 bis 7, **dadurch gekennzeichnet, daß** das erste Teil (110) einen Geometriekorrektor (113) umfaßt, der die hintere Kontaktfläche des ersten Teils (110) trägt und der geeignet ist, sich gegenüber dem ersten Block (112) um eine zur Positionierungsrichtung senkrechte Achse zu drehen, um eine flächige Anlage zwischen dem ersten Teil (110) und dem zweiten Teil (120) zu gewährleisten.

9. Einrichtung nach einem der Ansprüche 1 bis 8, **dadurch gekennzeichnet, daß** sie einen Nachstellmechanismus umfaßt, der einen abgeschrägten Keil (151; 351) aufweist, welcher zwischen dem ersten Teil und dem Anschlag angeordnet ist, wobei der abgeschrägte Keil eine Vorderseite und eine Rückseite aufweist, die in der Positionierungsrichtung gegenüberliegen und die untereinander einen Winkel ungleich Null bilden, und wobei ein Organ auf den Keil eine elastische Rückstellkraft in einer zur Positionierungsrichtung senkrechten Rückstellrichtung ausübt.

10. Einrichtung nach den Ansprüchen 6 und 9, **dadurch gekennzeichnet, daß** der abgeschrägte Keil zwischen den Geometriekorrektoren eingefügt ist, um über seine Vorderseite und seine Rückseite mit deren Abflachungen in Kontakt zu gelangen.

11. Einrichtung nach einem der Ansprüche 9 und 10, **dadurch gekennzeichnet, daß** sie ein Teil zur Neutralisierung des Nachstellmechanismus durch Einwirken auf den abgeschrägten Keil in einer Richtung, die zu derjenigen entgegengesetzt ist, in der die elastische Rückstellkraft ausgeübt wird, umfaßt.

12. Anordnung, die von einem ersten Element und einem zweiten Element gebildet ist, welche mit Hilfe einer Einrichtung nach einem der Ansprüche 1 bis 10 in einer präzisen Relativposition gehalten werden.

13. Anordnung nach Anspruch 12, umfassend ein erstes Element (10) und ein zweites Element (20), die im Bereich einer Trennebene (P), welche zu einer gemeinsamen Verbindungsachse (A) senkrecht verläuft, verbunden sind, **dadurch gekennzeichnet, daß** die Positionierungsvorrichtungen (100) in jeweiligen Relativpositionierungsrichtungen (D) wirken, die zu der Trennebene parallel verlaufen.

**14.** Anordnung nach einem der Ansprüche 12 und 13, die ein Form- oder Gestaltungswerkzeug für die Herstellung von Verbundwerkstoffteilen bildet.

**15.** Verfahren zur Herstellung einer Anordnung, die von einem ersten Element und einem zweiten Element, welche in einer präzisen Relativposition gehalten sind, gebildet ist, umfassend eine Einrichtung nach einem der Ansprüche 1 bis 11, wobei das Verfahren **dadurch gekennzeichnet ist, daß** es die Schritte umfaßt:

- der Bezugspositionierung des ersten Elements und des zweiten Elements mit Hilfe von Organen zur Bezugspositionierung, die in Positionierungsbezugsaufnahmen eingesteckt sind, welche gegenüberliegend in benachbarten Teilen des ersten und des zweiten Elements ausgebildet sind,
- des Anbringens einer Vielzahl von Positionierungsvorrichtungen an dem ersten und dem zweiten Element in einem ungespannten Zustand in den Positionierungsrichtungen,
- des Verbindens des ersten und des zweiten Elements, um die Anordnung zu bilden,
- des Einstellens einer jeden Positionierungsvorrichtung in ihrer Positionierungsrichtung, um das erste Teil, das zweite Teil und den Anschlag in gegenseitigen Kontakt zu bringen, ohne Spiel zwischen dem ersten Element und dem zweiten Element, und
- des Herausnehmens der Bezugspositionierungsorgane.

FIG.1

EP 2 090 189 B1

FIG.2

**FIG.3**

**FIG.4**

**FIG.5**

**FIG.7**

**FIG.6**

**FIG.8**

**FIG.9**

**FIG.10**

FIG.11

FIG.12

FIG.13

FIG.14

FIG.15

FIG.16

**FIG.17**

FIG.18

EP 2 090 189 B1

FIG.19

FIG.20

FIG.21

FIG.22

FIG.23

**FIG.24**

112c

110

112

113a

113b

D

115

117

119

113b

113

112

**FIG.25**

FIG.27

FIG.26

FIG.28

FIG.29

FIG.30

FIG.31

FIG.32

**RÉFÉRENCES CITÉES DANS LA DESCRIPTION**

**Documents brevets cités dans la description**

- DE 19531698